# EUROPÄISCHE PATENTANMELDUNG

(11) **EP 2 921 959 A1**
(43) Veröffentlichungstag der Anmeldung: **23.09.2015**
(21) Anmeldenummer: 14160521.2
(22) Anmeldetag: 18.03.2014
(51) Int. Cl.: G06F 11/10

(54) **Verfahren und Anordnung zum effizienten Korrigieren von Ein-Bit-Fehlern**

(71) Anmelder: Siemens Aktiengesellschaft, 80333 München (DE)
(72) Erfinder: Ghameshlu, Majid, 1110 Wien (AT); Matschnig, Martin, 3430 Tulln (AT); Taucher, Herbert, 2340 Mödling (AT)
(74) Vertreter: Maier, Daniel Oliver

(57) **Zusammenfassung**

Die vorliegende Erfindung betrifft ein Verfahren zum effizienten Korrigieren von Ein-Bit-Fehlern sowie auf eine zugehörige Anordnung (AN) zur Durchführung des erfindungsgemäßen Verfahrens. Dabei ist zumindest eine erste Speichereinheit (SP1) vorgesehen, in welcher Dateneinheiten mittels Schreibzugriffen abgespeichert und aus welcher Dateneinheiten mittels Lesezugriffen ausgelesen werden können. Weiterhin ist für die erste Speichereinheit (SP1) ein Fehlerkorrekturmodul (FM) vorgesehen, mit welchem Ein-Bit-Fehler erkannt und korrigiert werden können. Die erste Speichereinheit (SP1) wird durch eine zweite getrennte Speichereinheit (SP2) mit einer zugehörigen Zugriffssteuerungslogik (ZS) ergänzt (1). Das Fehlerkorrekturmodul (FM) der ersten Speichereinheit (SP1) wird dabei mit der Zugriffssteuerungslogik (ZS) der zweiten Speichereinheit (SP2) gekoppelt (2). Wird in einer in der ersten Speichereinheit (SP1) abgelegten Dateneinheit ein Ein-Bit-Fehler festgestellt, so wird dieser durch das Fehlerkorrekturmodul (FM) korrigiert (3). Die korrigierte Dateneinheit wird dann mit Hilfe der Zugriffssteuerungslogik (ZS) in die zweite Speichereinheit (SP2) geschrieben und dort abgespeichert (4). Durch das erfindungsgemäße Verfahren und die zugehörige Anordnung werden auf einfache und effiziente Weise bei gleichbleibender Systemverfügbarkeit Verluste bei einer Zugriffsperformanz durch eine Korrektur von Ein-Bit-Fehlern verhindert und es ist keine Anpassung der umgebenden Schaltung für den Einsatz des Verfahrens sowie der zugehörigen Anordnung notwendig.

## Beschreibung

### Technisches Gebiet

Die vorliegende Erfindung betrifft allgemein das Gebiet der elektronischen und logischen Schaltungen. Im Speziellen bezieht sich die vorliegende Erfindung auf ein Verfahren zum effizienten Korrigieren von Ein-Bit-Fehlern in einer Speichereinheit sowie auf eine zugehörige Anordnung zur Durchführung des erfindungsgemäßen Verfahrens. Dabei ist zumindest eine Speichereinheit vorgesehen, in welcher Dateneinheiten mittels Schreibzugriffen abgespeichert und aus welcher Dateneinheiten mittels Lesezugriffen ausgelesen werden können. Weiterhin ist eine für diese Speichereinheit ein Fehlerkorrekturmodul vorgesehen, mit welchem Ein-Bit-Fehler in der Speichereinheit erkannt und korrigiert werden.

### Stand der Technik

Logische bzw. elektronische Schaltungen bilden heutzutage die Grundlage für jegliche Elektronik, insbesondere in der Computertechnik. Für ein Ablegen und Speichern von Dateneinheiten, welche von Bauelementen der elektronischen Schaltung für ein Ausführen von Prozessen oder Prozeduren genutzt oder dabei erzeugt werden, sind üblicherweise Speichereinheiten, so genannte elektronischen Speicherbausteine vorgesehen. Eine Speichereinheit bzw. Speicherbaustein ist ein integrierter Schaltkreis, welcher aus einer Vielzahl an Speicherzellen für die Ablage von Dateneinheiten besteht. Speicherbausteine werden beispielsweise als so genanntes Random Access Memory (RAM), EPROM oder als so genannter Flash-Speicher z.B. zum Auflöten auf eine Leiterplatte angeboten.

Ein RAM ist beispielsweise ein Speicher mit einem wahlfreiem/direktem Zugriff, in welchem Informationen bzw. Dateneinheiten gespeichert werden. RAMs werden z.B. als integrierter Schaltkreis hauptsächlich in Silizium-Technologie realisiert und in allen Arten von elektronischen Geräten bzw. Schaltungen (z.B. als Arbeitsspeicher in einem Computer, etc.) eingesetzt. Dabei gibt es verschiedene technische Umsetzungen von RAMs wie z.B. so genannte flüchtige oder volatile RAMs, welche am häufigsten eingesetzt werden, und so genannte nonvolatilen RAMs (z.B. magnetische oder ferromagnetische RAMs, resistive RAMs), welche ein sehr neu und junge Entwicklung darstellen. Bei den volatilen oder flüchtigen RAMs geht die gespeicherte Information nach Abschaltung einer Stromzufuhr bzw. Betriebsspannung verloren. Ein derartiges flüchtiges RAM ist neben dem häufig verwendeten dynamischen RAM das so genannte statische RAM oder SRAM. Als statisches RAM oder SRAM werden meist kleinere, elektronische Speichereinheiten bezeichnet, welche als Besonderheit ihren Speicherinhalt ohne laufende Auffrischungszyklen behalten, da dieser in bistabilen Kippstufen gespeichert wird. SRAMs werden als schnelle Speicher mit relativ kleiner Datenkapazität beispielsweise überall dort angewendet, wo auf Dateninhalte z.B. mittels Lese- und/oder Schreibzugriffen schnell zugegriffen werden muss wie z.B. in Prozessoren als so genannter Cache oder bei elektronischen integrierten Schaltungen (z.B. ASICs, FPGAs, etc.) als lokaler Speicher auf einem Chip.

Aufgrund von äußeren Einflüssen (wie z.B. kosmischer Strahlung, etc.) kann von einzelnen Speicherzellen von Speichereinheiten wie z.B. SRAMs, etc. der gespeicherte Inhalt verloren werden. Eine Wahrscheinlichkeit dafür wird üblicherweise als Soft Error Rate oder SER bezeichnet. Dabei können beispielsweise ein, zwei oder mehrere Bits einer gespeicherten Dateneinheit (z.B. eines Datenwortes) umkippen. Je nach Anzahl an umgekippten Bits wird bei einem derartigen Fehler von einem Ein-Bit-Fehler, Zwei-Bit-Fehler oder Mehr-Bit-Fehler gesprochen. D.h. als Ein-Bit-Fehler oder Bitfehler wird ein Fehler in einem einzelnen Bit einer gespeicherten Dateneinheit bezeichnet. Statt des korrekten Werts (d.h. dem Wert 0 oder 1) weist dieses Bit den jeweils anderen Wert auf - d.h. anstatt einer 1 ist eine 0 oder umgekehrt abgelegt. Ein derartiges Bit wird dann als gekippt oder umgekippt bezeichnet. Derartige Ein-Bit-Fehler in Dateneinheiten können beispielsweise mittels eines so genannten Paritätsbits erkannt, aber nicht korrigiert werden. Zur Korrektur eines Ein-Bit-Fehlers sind meist aufwändigere Verfahren mit so genannten fehlerkorrigierenden Codes wie z.B. dem so genannten Error-Correcting-Code (ECC) erforderlich.

Error-Correcting-Code oder ECC ist ein Fehlerkorrekturverfahren für Speichereinheiten, bei welchem redundante Information (z.B. so genannte Check-Bits) erzeugt und mit der entsprechenden, zugehörigen Dateneinheit in der Speichereinheit abgelegt werden. Mit dieser redundanten Information können dann beispielsweise Ein-Bit-Fehler bei Lesezugriffen auf die jeweilige in der Speichereinheit abgelegte Dateneinheit erkannt und korrigiert sowie Zwei-Bit- und teilweise auch Mehr-Bit-Fehler erkannt werden. Für einen entsprechenden ECC-Speicherschutz ist es allerdings notwendig, dass ein Speichercontroller, von welchem einen Datenfluss zwischen einer zugreifenden Einheit (z.B. Prozessor, CPU, etc.) und der Speichereinheit geregelt wird, beispielsweise einen entsprechenden ECC-Algorithmus beherrscht. Der Speichercontroller wird dabei in gewisser Weise zu einem Fehlerkorrekturmodul erweitert. Von diesem zum Fehlerkorrekturmodul erweiterten Speichercontroller wird dann beispielsweise anhand der bei den Dateneinheiten abgelegten Check-Bits während der Lesezugriffe auf diese Dateneinheiten bzw. auf die Speichereinheit geprüft, ob sich die jeweiligen Dateneinheiten verändert haben. Wird z.B. ein Ein-Bit-Fehler in einer von der Speichereinheit gelesenen Dateneinheit erkannt, so wird dieser Ein-Bit-Fehler in der gelesenen Dateneinheit korrigiert. Es wird allerdings keinen Korrektur der Dateneinheit in der Speichereinheit durchgeführt - d.h. korrigierte Dateneinheiten werden nicht in die Speichereinheit zurückgeschrieben. So bleibt z.B. bis zu einem Überschreiben dieser Dateneinheit der Ein-Bit-Fehler in der Speichereinheit bestehen und es kann daraus gegebenenfalls ein nicht korrigierbarer Zwei- oder Mehr-Bit-Fehler werden.

Aus der Schrift "C.-L. Su, Y.-T. Yeh, and C.-W. Wu, "An Integrated ECC and Redundancy Repair Scheme for Memory Reliablity Enhancement", in Defect and Fault Tolerance in VLSI Systems (DFT 2005), 20th IEEE International Symposium, pp. 81-89, 2005." ist beispielsweise ein Verfahren bekannt, bei welchem Ein-Bit-Fehler nicht nur während eines Lesezugriff auf die Speichereinheit durch z.B. einen ECC-Controller bzw. ein Fehlerkorrekturmodul korrigiert, sondern die Ein-Bit-Fehler auch in der Speichereinheit selbst ausgebessert werden, damit aus diesen im Laufe der Zeit keine Zwei- oder Mehr-Bit-Fehler werden. Ein Nachteil in einem derartigen Verfahren liegt allerdings darin, dass Schreibzugriffe, mit welchen die korrigierten Dateneinheiten in die Speichereinheit zurückgeschrieben werden, mit den Lesezugriffen von zugreifenden Einheiten (z.B. Prozessor, CPU, etc.) oder anderen Schreibzugriffen arbitriert werden müssen, um Zugriffskonflikte zu vermeiden. Weiterhin ist für ein derartiges Verfahren eine spezifische Anpassung einer externen Schnittstelle der Speichereinheit notwendig (z.B. HOLD-Mechanismus zum Einfügen von einem Wartestatus bzw. Waitstates für eine Unterbrechung des jeweils aktuellen Zugriffs. Gegebenenfalls muss auch eine umgebende elektronische Schaltung angepasst werden. Bei bereits vorhandenen Schaltungen kann beispielsweise ein Einführen eines derartigen Verfahrens zu einem Umbau der gesamten Schaltung führen. Weiterhin wird durch das Arbitrieren und/oder die Verwendung von z.B. einem HOLD-Mechanismus vor allem eine Performance bzw. die Geschwindigkeit von Zugriffen auf die Speichereinheit wesentlich reduziert.

### Darstellung der Erfindung

Der Erfindung liegt daher die Aufgabe zugrunde, ein Verfahren sowie eine Anordnung zur Durchführung des Verfahrens anzugeben, durch welche auf einfache Weise ohne zusätzlichen Aufwand Ein-Bit-Fehler ohne Performance-Verluste korrigiert werden können.

Diese Aufgabe wird durch ein Verfahren sowie durch eine Anordnung der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem eine erste Speichereinheit mit Fehlerkorrekturmodul für z.B. eine elektronische Schaltung durch eine zweite Speichereinheit mit zugehöriger Zugriffssteuerungslogik ergänzt wird. Das Fehlerkorrekturmodul der ersten Speichereinheit wird mit der Zugriffssteuerungslogik der zweiten Speichereinheit gekoppelt. Bei Erkennen eines Ein-Bit-Fehlers in einer Dateneinheit der ersten Speichereinheit - beispielsweise bei einem Lesezugriff einer Einheit der elektronischen Schaltung (z.B. CPU, Prozessor, etc.) - wird dieser durch das Fehlerkorrekturmodul der ersten Speichereinheit korrigiert und dann mit Hilfe der Zugriffssteuerungslogik diese korrigierte Dateneinheit in die zweite Speichereinheit geschrieben.

Der Hauptaspekt des erfindungsgemäß vorgeschlagenen Verfahrens besteht darin, dass durch die zweite Speichereinheit mit Zugriffssteuerungslogik für korrigierte Dateneinheiten kein Arbitrieren von Zugriffen auf die erste Speichereinheit notwendig ist. Daher wird bei gleichbleibender Systemverfügbarkeit die Performance von Zugriffen z.B. durch CPUs, Prozessoren, etc. einer elektronischen Schaltung nicht gesenkt. Durch die Möglichkeit eines gleichzeitigen Lesens von der ersten Speichereinheit und Schreibens auf die zweiten Speichereinheit bleibt die Zugriffs-Performance weitgehend gleich wie ohne das erfindungsgemäße Verfahrens. Weiterhin ist bei Nutzung des erfindungsgemäßen Verfahrens keine Anpassung einer externen Schnittstelle der ersten Speichereinheit notwendig. Das erfindungsgemäße Verfahren kann auch auf einfache Weise in bereits bestehend elektronische Schaltungen integriert werden - es ist lediglich eine zweite Speichereinheit mit zugehöriger Zugriffssteuerungslogik zu ergänzen.

Dabei ist es von Vorteil, wenn eine erste Speicheradresse der fehlerhaften und korrigierten Dateneinheit in der ersten Speichereinheit und eine zweite Speicheradresse dieser Dateneinheit in der zweiten Speichereinheit von der Zugriffssteuerungslogik in einer zugehörigen Adresstabelle abgelegt wird. Durch den Eintrag der jeweiligen Speicheradressen in der ersten und zweiten Speichereinheit in der Adresstabelle kann die Zugriffssteuerungslogik bei Lesezugriffen auf eine erste Speicheradresse in der ersten Speichereinheit auf einfache und rasche Weise prüfen, ob für diese erste Speicheradresse eine korrigierte Dateneinheit in zweiten Speichereinheit gespeichert ist. Weiterhin werden korrigierte Dateneinheiten, welche in der zweiten Speichereinheit abgelegt sind, rasch aufgefunden und können an die jeweilige zugreifende Einheit einer elektronischen Schaltung weitergeleitet werden.

Bei einer bevorzugten Fortbildung des erfindungsgemäßen Verfahrens wird bei einem Lesezugriff auf die erste Speicheradresse in der ersten Speichereinheit, an welcher eine fehlerhafte Dateneinheit festgestellt worden ist, über die Zugriffssteuerungslogik eine Umleitung auf die zweite Speicheradresse in der zweiten Speichereinheit durchgeführt, an welcher die entsprechend korrigierte Dateneinheit abgespeichert ist. Damit wird auf einfache Weise sichergestellt, dass einer lesend zugreifenden Einheit einer elektronischen Schaltung wie z.B. einer CPU, einem Prozessor, etc. eine korrigierte Dateneinheit rasch zur Verfügung gestellt wird. Die lesend zugreifende Einheit erhält dabei die korrigierte Dateneinheit aus der zweiten Speichereinheit, welche von der Zugriffssteuerungslogik anhand der zugehörigen Adresstabelle aufgefunden und ermittelt wird. Auf die erste Speichereinheit bzw. die darin gespeicherte fehlerhafte Dateneinheit wird in diesem Fall nicht mehr zugegriffen.

Bei einer weiteren, bevorzugten Ausführungsvariante des erfindungsgemäßen Verfahrens wird bei einem Schreibzugriff auf die erste Speicheradresse, an welcher eine fehlerhafte Dateneinheit festgestellt worden ist, die entsprechende zweite Speicheradresse in der zweiten Speichereinheit über die Zugriffssteuerungslogik mit Hilfe der zugehörigen Adresstabelle auf ungültig gesetzt. Damit wird auf einfache Weise eine zweite Speicheradresse in der zweiten Speichereinheit wieder freigegeben, wenn an der entsprechend zugehörigen ersten Speicheradresse in der ersten Speichereinheit die fehlerhafte Dateneinheit durch neue Daten überschrieben wird. Bei einem nachfolgenden Lesezugriff auf die erste Speicheradresse wird dann wieder auf die erste Speichereinheit zugriffen und geprüft, ob die darin abgelegte Dateneinheit einen Ein-Bit-Fehler aufweist oder nicht.

Idealerweise wird eine Größe der zweiten Speichereinheit, welche beispielsweise als so genanntes statisches Ramdom Access Memory (SRAM) oder als Register-Speicher aufgeführt sein kann, an einer Wahrscheinlichkeit bemessen, mit welcher Ein-Bit-Fehler in so genannte Zwei-Bit-Fehler gewandelt werden. Damit kann die Größe der zweiten Speichereinheit an den entsprechenden Speicherbedarf angepasst werden. Auf diese Weise können auch die Kosten - insbesondere bei Einsatz eines SRAMs, welches beispielsweise mehr Bauelemente (z.B. Transistoren, etc.) und Chipfläche benötigt als andere Speichereinheiten wie z.B. ein dynamisches RAM, etc. - möglichst niedrig gehalten werden. Alternativ kann für die zweite Speichereinheit statt eines SRAMs auch ein Registerspeicher oder eine Registerbank verwendet werden. Ein Registerspeicher ist eine Anzahl von Registern, welche blockartig organisiert sind und dann einzeln über die Zugriffssteuerungslogik als z.B. Adressdecoder angesteuert werden können. Aus Geschwindigkeitsgründen können die Register des Registerspeichers z.B. über direkte Steuerleitungen adressiert werden.

Weiterhin wird die Aufgabe mit einer Anordnung zur Durchführung des erfindungsgemäßen Verfahrens gelöst. Diese Anordnung besteht zumindest aus einer ersten Speichereinheit zum Abspeichern von Dateneinheiten (z.B. für die Nutzung, Bearbeitung, etc. in einer elektronischen Schaltung) mit einem zugehörigen Fehlerkorrekturmodul, von welchem insbesondere Ein-Bit-Fehler erkannt und korrigiert und gegebenenfalls Zwei-Bit-Fehler erkannt werden können. Weiterhin ist in der erfindungsgemäßen Anordnung eine zweite Speichereinheit mit einer zugehörigen Zugriffssteuerungslogik, welche mit dem Fehlerkorrekturmodul der ersten Speichereinheit gekoppelt ist, derart vorgesehen, dass bei einem erkannten Ein-Bit-Fehler in einer in der ersten Speichereinheit abgelegten Dateneinheit eine durch das Fehlerkorrekturmodul korrigierte Dateneinheit mit Hilfe der Zugriffssteuerungslogik in die zweite Speichereinheit geschrieben wird.

Die mit der erfindungsgemäßen Schaltanordnung erzielbaren Vorteile bestehen insbesondere darin, dass durch eine Ergänzung der zweiten Speichereinheit und der zugehörigen Zugriffssteuerungslogik bei einer Korrektur von Ein-Bit-Fehlern eine Systemverfügbarkeit einer zugehörigen elektronischen Schaltung gleichbleibt, da Ein-Bit-Fehler erkannt und korrigiert werden. Weiterhin sind für weitere Lesezugriff in der zweiten Speichereinheit die korrigierten Dateneinheiten verfügbar, sodass z.B. keine neuerliche Korrektur einer mit einem Ein-Bit-Fehler-behafteten Dateneinheit aus der ersten Speichereinheit notwendig ist, wenn diese bereits einmal durchgeführt worden ist. Weiterhin werden durch den Einsatz der zweiten Speichereinheit mit der zugehörigen Zugriffssteuerungslogik Performance-Verluste bei lesenden Zugriffen auf die erste Speichereinheit verhindert, da durch die in der erfindungsgemäßen Anordnung eingesetzte zweite Speichereinheit ein paralleles Lesen/Prüfen/Korrigieren von Dateneinheiten aus der ersten Speichereinheit und ein Schreiben von korrigierten Dateneinheiten auf die zweite Speichereinheit möglich ist. Die erfindungsgemäße Anordnung ist auch auf einfache Weise und ohne Anpassungen (z.B. einer externen Schnittstelle der ersten Speichereinheit) in elektronischen Schaltungen einsetzbar oder ohne Umbau einer umgebenden Schaltung in bereits bestehende elektronische Schaltungen integrierbar.

Es ist dabei von Vorteil, wenn die Zugriffssteuerungslogik der zweiten Speichereinheit zumindest einen Adresstabelle umfasst. In dieser Adresstabelle werden Speicheradressen von Dateneinheiten der ersten Speichereinheit mit Speicheradressen der zweiten Speichereinheit verknüpft und abgelegt. Durch die Adresstabelle können nach einer erfolgten Korrektur von Ein-Bit-Fehlern bei Lesezugriffen korrigierte Daten rasch und einfach in der zweiten Speichereinheit gefunden und dann einer zugreifenden Einheit einer elektronischen Schaltung zur Verfügung gestellt werden. Anhand der Adresstabelle ist auch auf effiziente Weise feststellbar, ob für eine Speicheradresse der ersten Speichereinheit korrigierte Daten vorliegen.

Weiterhin ist es günstig, wenn die Zugriffssteuerungslogik der zweiten Speichereinheit eine Vergleichseinheit zum Vergleichen von Speicheradressen aufweist. Diese Vergleichseinheit wird idealerweise bei einem Lesezugriff und/oder Schreibzugriff auf eine erste Speicheradresse der ersten Speichereinheit eingesetzt, um auf einfache und rasche Weise festzustellen, ob diese mit einer zweiten Speicheradresse der zweiten Speichereinheit über die Adresstabelle verknüpft ist. Damit kann bei einem Lesezugriff sehr rasch und einfach eine korrigierte, in der zweiten Speichereinheit abgelegte Dateneinheit gefunden werden. Ein Zugriff auf die erste Speichereinheit ist damit nicht mehr notwendig. Weiterhin kann damit bei einem Schreibzugriff auf eine erste Speicheradresse der ersten Speichereinheit eine gegebenenfalls mit der ersten Speicheradresse verknüpfte zweite Speicheradresse in der zweiten Speichereinheit rasch aufgefunden und auf ungültig gesetzt werden. Idealerweise umfasst die Zugriffssteuerungslogik der zweiten Speichereinheit auch ein Fehlerkorrekturmodul, sodass auf einfache Weise in der zweiten Speichereinheit auftretende Ein-Bit-Fehler erkannt und korrigiert werden können.

### Kurzbeschreibung der Zeichnung

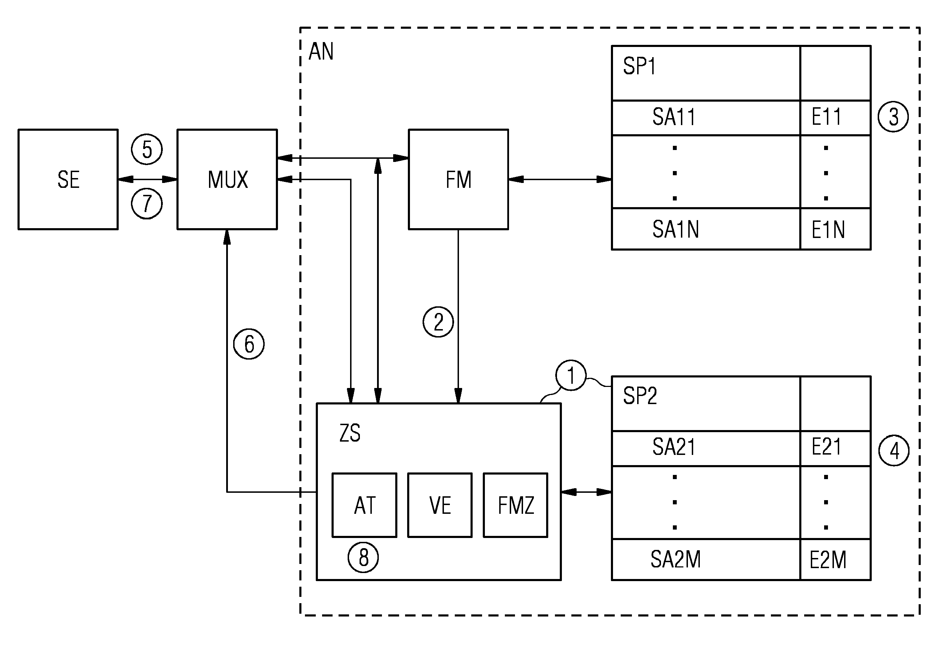

Die Erfindung wird nachfolgend in beispielhafter Weise anhand der beigefügten Figur erläutert. Figur 1 zeigt dabei in beispielhafter und schematischer Weise eine Anordnung zur Durchführung eines Verfahrens zum effizienten Korrigieren von Ein-Bit-Fehlern sowie einen Ablauf des erfindungsgemäßen Verfahrens.

### Ausführung der Erfindung

Figur 1 zeigt in schematischer und beispielhafter Weise eine Anordnung AN zur Durchführung des erfindungsgemäßen Verfahrens zum effizienten Korrigieren von Ein-Bit-Fehlern. Die erfindungsgemäße Anordnung AN umfasst zumindest eine erste Speichereinheit SP1 wie z.B. ein statisches Random Access Memory sowie ein zur ersten Speichereinheit SP1 gehörendes Fehlerkorrekturmodul FM, welche z.B. als Error Correcting Code- oder ECC-Logik ausgeführt sein kann. In der ersten Speichereinheit SP1 werden Dateneinheiten an Speicheradressen SA11 bis SA1N abgelegt. Die Dateneinheiten sind durch so genannte Sicherungs- oder Check- oder ECC-Bits E11 bis EIN gesichert, welche bei den Dateneinheiten bzw. zugehörigen Speicheradressen SA11 bis SA1N hinterlegt werden.

Wird beispielsweise als Fehlerkorrekturmodul FM eine ECC-Logik eingesetzt, so werden z.B. beim Abspeichern einer Dateneinheit an einer ersten Speicheradresse SA11 in der ersten Speichereinheit SP1 eine redundante Information erzeugt und als ECC-Bits E11 bei der ersten Speicheradresse SA11 abgelegt. Mit den ECC-Bits E11 kann dann bei einem Lesezugriff auf die erste Speicheradresse SA11 vom Fehlerkorrekturmodul FM geprüft werden, ob die darin gespeicherte Dateneinheit einen Ein-Bit-Fehler aufweist. Dieser Ein-Bit-Fehler kann dann vom Fehlerkorrekturmodul FM anhand der ECC-Bits E11 korrigiert werden. Weiterhin können mit Hilfe der ECC-Bits E11 bis EIN Zwei- und/oder Mehr-Bit-Fehler in den zugehörigen Dateneinheiten vom Fehlerkorrekturmodul FM erkannt werden.

Der erfindungsgemäße Anordnung AN weist weiterhin eine zweite Speichereinheit SP2 auf, welche z.B. als SRAM oder als Registerspeicher bzw. Registersatz ausgeführt sein kann. In der zweiten Speichereinheit SP2 können ebenfalls an Speicheradressen SA21 bis SA2M Dateneinheiten abgespeichert werden.

Die in der zweiten Speichereinheit SP2 abgelegten Dateneinheiten können ebenfalls durch so genannte Sicherungs- oder Check- oder ECC-Bits E21 bis E2M gesichert sein, welche bei den Dateneinheiten bzw. zugehörigen Speicheradressen SA21 bis SA2M hinterlegt werden.

Weiterhin ist eine Zugriffssteuerungslogik ZS vorgesehen, welche zur zweiten Speichereinheit SP2 gehört und von welcher lesende wie schreibende Zugriffe auf die zweite Speichereinheit SP2 geregelt werden. Die Zugriffssteuerungslogik umfasst dabei zumindest eine Adresstabelle AT, eine Vergleichseinheit VE sowie ein Fehlerkorrekturmodul FMZ für die zweite Speichereinheit SP2. Vom Fehlerkorrekturmodul FMZ für die zweite Speichereinheit SP2, welches z.B. ebenfalls als ECC-Logik ausgeführt sein kann, werden beispielsweise die Check- oder ECC-Bits E21 bis E2M für die in der zweiten Speichereinheit abgelegten Dateneinheiten generiert und diese Dateneinheiten auf Fehler geprüft sowie gegebenenfalls korrigiert. Über die Adresstabelle AT des Zugriffssteuerungslogik ZS können die Speicheradressen SA11 bis SA1N der ersten Speichereinheit SP1 mit Speicheradressen SA21 bis SA2M der zweiten Speichereinheit SP2 verknüpft werden. Mit der Vergleichseinheit VE kann dann von der Zugriffssteuerungslogik z.B. ein lesenden oder schreibenden Zugriffen, welche von Einheiten SE (z.B. CPU, Prozessor, etc.) einer umgebenden elektronischen Schaltung kommen, eine Zugriffsadresse mit den in der Adresstabelle AT abgelegten Speicheradressen SA11 bis SA1N der ersten Speichereinheit SP1 verglichen werden.

Die Zugriffssteuerungslogik ZS der zweiten Speichereinheit SP2 ist mit dem Fehlerkorrekturmodul FM der ersten Speichereinheit gekoppelt, damit z.B. korrigierte Dateneinheiten, Informationen über Speicheradressen SA11 bis SA1N der ersten Speichereinheit SP1, etc. an die Zugriffssteuerungslogik ZS zur Verarbeitung weitergeleitet werden können. Weiterhin weist die erfindungsgemäße Anordnung AN insbesondere zumindest am Fehlerkorrekturmodul FM und an der Zugriffssteuerungslogik ZS Schnittstellen zu einer umgebenden elektronischen Schaltung z.B. über einen Multiplexer MUX auf. Über den Multiplexer MUX kann von Einheiten SE wie z.B. CPU, Prozessor, etc. der umgebenden elektronischen Schaltung lesend und/oder schreibend auf die Anordnung AN und die zugehörigen Speichereinheiten SP1, SP2 zugegriffen werden.

Für das erfindungsgemäße Verfahren, welches von der erfindungsgemäßen Anordnung AN durchgeführt wird, wird in einem ersten Verfahrensschritt 1 die erste Speichereinheit SP1 mit Fehlerkorrekturmodul FM, in welcher an Speicheradressen SA11 bis SA1N Dateneinheiten mit Check- bzw. ECC-Bits E11 bis EIN abgelegt sind, durch die zweite Speichereinheit SP2 mit zugehöriger Zugangssteuerungslogik ZS ergänzt. In einem zweiten Verfahrensschritt 2 wird die Zugangssteuerungslogik ZS der zweiten Speichereinheit SP2 mit dem Fehlerkorrekturmodul FM des ersten Speichereinheit SP1 gekoppelt.

Wird bei einem Lesezugriff auf einen in einer ersten Speicheradresse SA11 in der ersten Speichereinheit SP1 gespeicherten Dateneinheit anhand der zugehörigen Check- oder ECC-Bits E11 vom Fehlerkorrekturmodul FM ein Ein-Bit-Fehler in dieser Dateneinheit erkannt, so wird in einem dritten Verfahrensschritt 3 der Ein-Bit-Fehler in diese Dateneinheit vom Fehlerkorrekturmodul FM korrigiert. Die korrigierte Dateneinheit wird dann z.B. an die zugreifende Einheit SE der umgebenden Einheit weitergeleitet. Parallel dazu wird die korrigierte Dateneinheit mit der ersten Speicheradresse SA11, an welcher diese in der ersten Speichereinheit SP1 abgelegt ist, an die Zugriffssteuerungslogik ZS der zweiten Speichereinheit weitergeleitet. Die korrigierte Dateneinheit wird dann in einem vierten Verfahrensschritt 4 mit Hilfe der Zugriffssteuerungslogik ZS an einer zweiten Speicheradresse SA21 in der zweiten Speichereinheit SP2 abgelegt. Diese zweite Speicheradresse SA21 wird von der Zugriffssteuerungslogik dabei mit der ersten Speicheradresse SA11 der Dateneinheit in der ersten Speichereinheit SP1 in die Adresstabelle AT eingetragen. Weiterhin können vom Fehlerkorrekturmodul FMZ der Zugriffssteuerungslogik für die korrigierte Dateneinheit Check-oder ECC-Bits E21 ermittelt und mit der Dateneinheit bei der zweiten Speicheradresse SA21 in der Speichereinheit SP2 hinterlegt werden.

Wird in einem beispielhaften, nachfolgenden fünften Verfahrensschritt 5 von einer Einheit SE der umgebenden elektronischen Schaltung mittels eines Lesezugriffs auf die Dateneinheit in der ersten Speicheradresse SA11 der ersten Speichereinheit SP1 zugegriffen, so wird dieser Lesezugriff über den Multiplexer MUX an das Fehlerkorrekturmodul FM und an die Zugriffssteuerungslogik ZS gesendet. Dabei wird von der Zugriffssteuerungslogik ZS mit Hilfe der Vergleichseinheit VE anhand der Adresstabelle AT festgestellt, dass für die erste Speicheradresse SA11 eine korrigierte Dateneinheit in der zweiten Speichereinheit SP2 existiert. Der Lesezugriff auf die erste Speichereinheit SP1 wird dadurch verhindert und von der Zugriffssteuerungslogik ZS auf die zweite Speichereinheit SP2 umgeleitet. In einem sechsten Verfahrensschritt 6 wird von der Zugriffssteuerungslogik ZS anhand der Adresstabelle AT die zweite Speicheradresse SA21 der korrigierten Dateneinheit in der zweiten Speichereinheit SP2 ermittelt. Die korrigierte Dateneinheit wird dann aus der zweiten Speichereinheit SP2 ausgelesen, gegebenenfalls mit dem Fehlerkorrekturmodul FMZ geprüft und korrigiert, und von der Zugriffssteuerungslogik ZS über den Multiplexer MUX an die zugreifende Einheit SE der umgebenden elektronischen Schaltung übermittelt.

In einem nachfolgenden siebenten Verfahrensschritt 7 wird beispielsweise von einer Einheit SE der umgebenden elektronischen Schaltung schreibend auf die erste Speicheradresse SA11 der ersten Speichereinheit SP1, an welcher ein Ein-Bit-Fehler festgestellt worden ist, zugegriffen. So wird dieser Schreibzugriff über den Multiplexer MUX wieder an das Fehlerkorrekturmodul FM der ersten Speichereinheit SP1 und an die Zugriffssteuerungslogik ZS für die zweite Speichereinheit SP2 geleitet. Von der Zugriffssteuerungslogik ZS wird der Schreibzugriff erkannt und anhand der Adresstabelle AT mit Hilfe der Vergleichseinheit VE festgestellt, dass für die erste Speicheradresse SA11 in der ersten Speichereinheit SP1 eine korrigierte Dateneinheit an der zweiten Speicheradresse SA21 in der zweiten Speichereinheit SP2 hinterlegt ist. In einem achten Verfahrensschritt 8 wird dann die zweite Speicheradresse SA21 in der zweiten Speichereinheit SP2 z.B. mittels der Adresstabelle AT auf ungültig gesetzt, damit bei einem neuerlichen Lesezugriff auf die erste Speicheradresse SA11 der ersten Speichereinheit SP1 keine Umleitung mehr auf die zweite Speichereinheit SP2 durchgeführt wird. Die Daten an der ersten Speicheradresse SA11 in der ersten Speichereinheit SP1 werden durch eine neue Dateneinheit bzw. durch den Schreibzugriff überschrieben. Vom Fehlermodul FM der ersten Speichereinheit SP1 können für die neu eingetragene Dateneinheit entsprechende Check- bzw. ECC-Bits E11 erstellt werden und mit der neuen Dateneinheit bei der ersten Speicheradresse SA11 eingetragen werden.

Durch die erfindungsgemäße Anordnung AN sowie durch das erfindungsgemäße Verfahren werden für in der ersten Speichereinheit SP1 fehlerhafte Dateneinheiten entsprechend korrigierte Dateneinheiten ohne Ein-Bit-Fehler für lesende Zugriffe von der zweiten Speichereinheit SP2 zur Verfügung gestellt. In der ersten Speichereinheit SP1 werden mit Ein-Bit-Fehlern behaftete Dateneinheiten nicht korrigiert. Die Größe der zweiten Speichereinheit SP2 wird idealerweise anhand einer Wahrscheinlichkeit abgeschätzt, mit welcher Ein-Bit-Fehler in Zwei-Bit-Fehler gewandelt werden.

## Patentansprüche

1. Verfahren zum effizienten Korrigieren von Ein-Bit-Fehlern, wobei Dateneinheiten in einer ersten Speichereinheit (SP1) abgespeichert werden und für die erste Speichereinheit (SP1) ein Fehlerkorrekturmodul (FM) eingesetzt wird, **dadurch gekennzeichnet, dass** die erste Speichereinheit (SP1) durch eine zweite getrennte Speichereinheit (SP2) mit einer zugehörigen Zugriffssteuerungslogik (ZS) ergänzt wird (1), dass das Fehlerkorrekturmodul (FM) der ersten Speichereinheit (SP1) mit der Zugriffssteuerungslogik (ZS) der zweiten Speichereinheit (SP2) gekoppelt wird (2), dass bei Erkennen eines Ein-Bit-Fehler in einer in der ersten Speichereinheit (SP1) abgelegten Dateneinheit die Dateneinheit durch das Fehlerkorrekturmodul (FM) korrigiert wird (3), und dass dann die korrigierte Dateneinheit mit Hilfe der Zugriffssteuerungslogik (ZS) in die zweite Speichereinheit (SP2) geschrieben wird (4).

2. Verfahren nach Anspruch 1, **dadurch gekennzeichnet, dass** eine erste Speicheradresse (SA11) der korrigierten Dateneinheit in der ersten Speichereinheit (SP1) und eine zweite Speicheradresse (SA21) der korrigierten Dateneinheit in der zweiten Speichereinheit (SP2) von der Zugriffssteuerungslogik (ZS) in einer zugehörigen Adresstabelle (AT) abgelegt wird (4).

3. Verfahren nach einem der Ansprüche 1 bis 2, **dadurch gekennzeichnet, dass** bei einem Lesezugriff auf die erste Speicheradresse (SA11) in der ersten Speichereinheit (SP1), in welcher die fehlerhafte Dateneinheit festgestellt worden ist, über die Zugriffssteuerungslogik (ZS) eine Umleitung auf die entsprechende zweite Speicheradresse (SA21) in der zweiten Speichereinheit (SP2) durchgeführt wird (5, 6).

4. Verfahren nach einem der Ansprüche 1 bis 2, **dadurch gekennzeichnet, dass** bei einem Schreibzugriff auf die erste Speicheradresse (SA11) in der ersten Speichereinheit (SP1), in welcher eine fehlerhafte Dateneinheit festgestellt worden ist, die entsprechende zweite Speicheradresse (SA21) in der zweiten Speichereinheit (SP2) über die Zugriffssteuerungslogik (ZS) auf ungültig gesetzt wird (7, 8).

5. Verfahren nach einem der vorangegangenen Ansprüche, **dadurch gekennzeichnet, dass** eine Größe der zweiten Speichereinheit (SP2) anhand einer Wahrscheinlichkeit bemessen wird, mit welcher Ein-Bit-Fehler in Zwei-Bit-Fehler gewandelt werden.

6. Anordnung (AN) zur Durchführung des erfindungsgemäßen Verfahrens nach den Ansprüchen 1 bis 5 bestehend aus zumindest einer ersten Speichereinheit (SP1) zum Abspeichern von Dateneinheiten mit einem zugehörigen Fehlerkorrekturmodul (FM), **dadurch gekennzeichnet, dass** eine zweite Speichereinheit (SP2) mit einer zugehörige Zugriffssteuerungslogik (ZS), welche mit dem Fehlerkorrekturmodul (FM) der ersten Speichereinheit (SP1) gekoppelt ist, derart vorgesehen ist, dass bei einem erkannten Ein-Bit-Fehler in einer in der ersten Speichereinheit (SP1) abgelegten Dateneinheit eine durch das Fehlerkorrekturmodul (FM) entsprechend korrigierte Dateneinheit mit Hilfe der Zugriffssteuerungslogik (ZS) in die zweite Speichereinheit (SP2) geschrieben wird.

7. Anordnung (AN) nach Anspruch 6, **dadurch gekennzeichnet, dass** die Zugriffssteuerungslogik (ZS) zumindest eine Adresstabelle (AT) zum Ablegen und Verknüpfen von Speicheradressen (SA11, ... SA1N) der ersten Speichereinheit (SP1) mit Speicheradressen (SA21, ..., SA2M) der zweiten Speichereinheit (SP2) aufweist.

8. Anordnung (AN) nach einem der Ansprüche 6 bis 7, **dadurch gekennzeichnet, dass** die Zugriffssteuerungslogik (ZS) weiterhin eine Vergleichseinheit (VE) zum Vergleichen von Speicheradressen (SA11, ..., SA1N, SA21, ..., SA2M) und ein Fehlerkorrekturmodul (FMZ) für die zweite Speichereinheit (SP2) umfasst.

9. Anordnung (AN) nach einem der Ansprüche 6 bis 8, **dadurch gekennzeichnet, dass** als zweite Speichereinheit (SP2) ein so genanntes statisches Random Access Memory oder ein Register-Speicher vorgesehen ist.
